# EUROPEAN PATENT APPLICATION

(11) **EP 2 779 074 A1**
(43) Date of publication of application: **17.09.2014**
(21) Application number: 14158720.4
(22) Date of filing: 11.03.2014
(51) Int. Cl.: G06Q 30/02

(54) **System and method for statistically determining bias in online survey results**

(30) Priority: 14.03.2013 US 201313831455
(71) Applicant: Yume, Inc., Redwood City, CA 94063 (US)
(72) Inventor: Sankaran, Ayyappan, San Jose, CA California 95138 (US); Damerdji, Halim, Los Altos, CA California 94022 (US); Kaushik, Vijay, Fremont, CA California 94536 (US)
(74) Representative: TBK

(57) **Abstract**

A system, method, and computer program determine bias in survey results due to non-responsive and/or erroneous survey response data, assess the impact of bias introduced by non-responsive and/or erroneous survey data on the survey results, and analyze the survey results accordingly to provide a more accurate assessment of the impressions of viewers of content (*e.g*., advertisements) viewed by the persons being surveyed. The analysis allows an advertiser to modify an advertisement to better promote a product or service and enable the advertiser to increase the probability of success of an advertising campaign and the cost-effectiveness of the campaign.

## Description

### BACKGROUND

Television and radio dominated the delivery of news, sports, and entertainment to the public until relatively recently. However, with the advent of Internet connectivity and the World Wide Web, the delivery of information and entertainment content has increasingly shifted to Internet-connected devices such as desk and laptop computers, tablet computers, cellular telephones and smartphones, as well as devices connected to the CTV television network.

In this regard, services such as CNBC deliver news content, services such as ESPN deliver sports content, and services such as Netflix and Hulu deliver entertainment including movies and television programs over the Internet. Many of these services are dependent on an advertising revenue model, such that advertisers place paid advertisements that accompany the information or entertainment content. Furthermore, other Internet enabled services, from email services to auction services to informational services, include advertisements to obtain revenue.

Due to the growing acceptance of delivery of information and entertainment content via the Internet, and the significant costs for placing advertising delivered over the Internet, advertisers have begun to more carefully manage their advertising content and the associated costs of advertising campaigns. Advertisers are interested in the effectiveness of their online advertising, for example, video advertising in particular, so that they can assess their return on investment. If there is a return on the investment, advertisers will likely increase the amount spent for online advertising. Consequently, advertisers focus on the impact of Internet-based advertising campaigns on members of the consuming public and whether the advertising that is delivered via the Internet creates a favorable impression and lends to building the advertised brand, as to which surveys play a vital role.

The World Wide Web is generally conducive to implementing surveys, associating them with advertisements contemporaneously delivered via the Internet, and collecting responses as survey data quickly and inexpensively. For example, commonly assigned co-pending U.S. Patent Application No. 12/455,314 filed on May 28, 2009, entitled SYSTEM AND METHOD FOR AUTOMATED ONLINE SURVEY, which is hereby incorporated herein in its entirety by this reference, relates to surveying specific characteristics of a website viewer population, such as demographic and psychographic statistics, which aids website owners and advertisers in optimizing advertising.

Typically, an advertisement appears on a web page or is delivered in conjunction with other content such as news, sports, or entertainment or other web-based service such as an email. By way of non-limiting example, the advertisement may be delivered as an image or video without audio or combined with audio content. The advertisement may be delivered before ("pre-roll"), during ("mid-roll"), or after ("post-roll") the non-advertising content. If the advertisement is delivered during the non-advertising content, the advertisement may be delivered during an interruption in the non-advertising content or simultaneously with the non-advertising content. If the advertisement is delivered simultaneously with the non-advertising content, the advertisement may be delivered as an image or video streamed as an overlay on the non-advertising content.

A survey may be associated to the content that is delivered via the Internet. At a predetermined time, typically before the delivery of the non-advertising content and the advertisement, a survey is delivered to the viewer/survey respondent. However, various problems are encountered in conjunction with the survey process, which generally fall into the categories of: there is (1) non-responsive survey data; and (2) erroneous survey data. Non-responsive survey data are survey results in which a person being surveyed fails to respond to the survey. Erroneous survey data are survey results in which a person being surveyed responds with one or more ungenuine responses.

A challenge for advertisers is to determine how such non-responsive and erroneous survey data bias the results obtained from the survey. Without accounting for the bias introduced into the survey results by non-responsive and erroneous survey data, the survey data is not reliable. Consequently, there is a need for a system and method to determine whether or not non-responsive or erroneous survey data is present and to properly account for bias in survey data introduced by non-responsive and erroneous survey data.

These and other limitations of the prior art will become apparent to those of skill in the art upon a reading of the following descriptions and a study of the several figures of the drawing.

### SUMMARY

A system and method in accordance with example embodiments assesses the bias of non-responsive and erroneous survey data on the overall survey results and thereafter statistically calibrates the overall survey based on the bias assessment. Embodiments disclosed herein are related to surveys, censuses and the like and schema for conducting the same, including the use of online questionnaires.

Certain embodiments, set forth by way of example and not limitation, relate to surveying persons viewing media streaming media accessed at a website to elicit their reactions. Favorable or unfavorable impressions of advertisements associated to other content such as video entertainment (e.g., a movie), news, sports, or other informational content or a brand can be a subject of the surveys.

By way of example, but not by way of limitation, an embodiment provides a calibration of online survey results by correcting for bias in the survey results due to non-responsive survey response data and/or erroneous survey response data, assessing the impact of non-responsive or erroneous survey data on the survey results, and analyzing the survey results accordingly. By statistically calibrating the survey results based on non-responsive and/or erroneous survey data, a more accurate assessment of the impressions of viewers of the content (e.g. advertisements) can be obtained, which may be employed by advertisers to measure the effectiveness of their advertising, cost effectiveness of the advertising, brand acceptance, and the like, in this non-limiting example.

Various embodiments, set forth by way of example and not limitation, address the above-described challenges, with important improvements over the prior art to determine the impact of non-responsive and erroneous survey data on the overall survey results. Accordingly, example systems and methods are described for conducting surveys or censuses, including schema for conducting online surveys and censuses, of persons whose responses are solicited to provide information to a survey or census sponsor. For example, persons viewing media such as one or more pages at a website or streaming media accessed at a website are surveyed to elicit reactions to the content of the media. Favorable or unfavorable impressions of advertisements delivered in conjunction with other content such as video entertainment (*e.g.,* a movie), news, sports, or other informational content delivered over a network such as the Internet can be example subjects of the surveys.

An embodiment, set forth by way of example and not limitation, provides a system to determine non-responsive survey bias in survey results respecting advertising content associated to media viewed by a plurality of viewers, including a sampling engine including instructions executable by a computer system to conduct a survey including one or more questions provided to the plurality of viewers of media accessible by the plurality of viewers, a survey engine including instructions executable by the computer system to receive survey data including responses by viewers responding to the survey, a data store including instructions executable by the computer system to store the survey response data in a computer-readable storage medium, and an analytics engine including instructions executable by the computer system after the survey is completed to analyze the survey response data to determine a mean, variance, and standard deviation for the survey response data and to analyze the variance and standard deviation among responding viewers to infer the non-responsive survey bias.

Another example embodiment provides a method for determination of non-responsive survey bias in survey results respecting advertising content associated to media viewed by a plurality of viewers, including conducting a survey including one or more questions provided to the plurality of viewers of media accessible by the plurality of viewers, receiving survey data including responses by viewers responding to the survey, and storing the survey response data in a processor-readable storage medium. After the survey is completed, a processor is used to access the survey response data, determining a mean, variance, and standard deviation for the survey response data using the processor, and analyzing the variance and standard deviation among responding viewers using the processor to infer the non-responsive survey bias. If the variance and standard deviation show a trend among responses away from the mean in a positive direction, the non-responsive survey bias is determined to be positive and if the variance and standard deviation show a trend among responses away from the mean in a negative direction, the non-responsive survey bias is determined to be negative.

A further example embodiment provides a system to correct for bias due to erroneous survey data in survey results respecting advertising content associated to media viewed by a plurality of viewers, including a sampling engine including instructions executable by a computer system to conduct a survey including one or more questions provided to the plurality of viewers of media accessible by the plurality of viewers, wherein at least one of the questions consists of a question to which the plurality of viewers are expected to know the answer, a survey engine including instructions executable by the computer system to receive survey data including responses by viewers responding to the survey, a data store including instructions executable by the computer system to store the survey response data in a computer-readable storage medium, and an analytics engine including instructions executable by the computer system after the survey is completed to analyze the survey response data to check the answers in the survey data to the at least one question included in the survey to which the answer is generally known and to selectively discard the survey data including erroneous answers.

A still further example embodiment provides a method for determination of bias due to erroneous survey data in survey results respecting advertising content associated to media viewed by a plurality of viewers, including conducting a survey including one or more questions provided to the plurality of viewers of media accessible by the plurality of viewers, wherein at least one of the questions consists of a question to which the plurality of viewers are expected to know the answer, receiving survey data including responses by viewers responding to the survey, storing the survey response data in a processor-readable storage medium, after the survey is completed, using a processor to access the survey response data, and analyzing the survey response data using the processor to check the answers in the survey data to at least the question included in the survey to which the answer is generally known and to selectively discard the survey data including erroneous answers.

Various example embodiments determine bias in the survey results due to non-responsive and/or erroneous survey response data, assess the impact bias introduced by non-responsive and/or erroneous survey data on the survey results, and analyze the survey results accordingly, and statistically calibrate the survey results based on bias due to non-responsive and/or erroneous survey data to provide a more accurate assessment of the impressions of viewers of content (*e.g.,* advertisements) viewed by the persons being surveyed. One example embodiment is preferably implemented by a fully automated software application and method executed on at least one computer system.

Calibrated survey results may be advantageously employed by advertisers to measure the effectiveness of their advertising, cost effectiveness of the advertising, brand acceptance, and the like. Calibrated survey results allow an advertiser to modify an advertisement to better promote a product or service and enable the advertiser to increase the probability of success of an advertising campaign and the cost-effectiveness of the campaign to fundamentally change the way advertisers analyze online survey data to adjust their advertising strategy.

These and other embodiments, features and advantages will become apparent to those of skill in the art upon a reading of the following descriptions and a study of the several figures of the drawing.

### BRIEF DESCRIPTION OF THE DRAWINGS

Several example embodiments will now be described with reference to the drawings, wherein like components are provided with like reference numerals. The example embodiments are intended to illustrate, but not to limit. In the drawing:
Figure 1 is a block diagram of a computer system for implementation of the system in accordance with one example embodiment.
Figure 2 is a block diagram of an alternative computer system for implementation of the system in accordance with another example embodiment.
Figure 3 is a block diagram illustrating an example embodiment of a survey environment for analyzing online survey results in accordance with one example embodiment of the system.
Figure 4 illustrates examples of representative questions included in a survey created in accordance with the example embodiments.
Figure 5 is a flow diagram illustrating an example process for generating a set of survey questions.
Figure 6 is a flow diagram illustrating an example process for conducting a survey.
Figure 7 is a flow diagram illustrating an example embodiment of the method for determining bias in online survey results due to non-responsive survey data in accordance with the present invention.
Figure 8 is a flow diagram illustrating an example embodiment of the method for determining bias in online survey results due to erroneous survey data in accordance with the present invention.

### DETAILED DESCRIPTION OF EXAMPLE EMBODIMENTS

Various example embodiments provide systems and methods for statistically calibrating online survey or census results based on correcting for bias due to non-responses to the survey or census and/or erroneous data in the survey or census results. For example, these can be valuable in helping an advertiser to increase the probability of success of an advertising campaign and the cost-effectiveness of the campaign.

Example embodiments provide a schema for online surveying to assess results of online surveying influenced by bias due to non-responsive survey data. Other example embodiments provide a schema for online surveying to assess results of online surveying influenced by bias due to erroneous survey data. Example embodiments provide statistical calibration of online surveys influenced by bias due to non-responses when subjecting persons, such as viewers of advertising, to surveys and/or erroneous survey data. The various aspects can be implemented by various systems, methods, and computer instructions stored on or in a computer-readable medium and capable of being executed by a processor to implement the desired surveying and statistical calibration of the survey results due to bias introduced by non-responsive and/or erroneous survey data.

Various example embodiments are particularly applicable to computer implemented software-based systems and methods to provide statistical calibration of survey results due to bias introduced by non-responsive and/or erroneous survey data, and it is in this context that the various example embodiments will be described. It will be appreciated, however, that the systems and methods for providing statistical calibration of survey results due to bias introduced by non-responsive and/or erroneous survey data in accordance with the present invention have greater utility, since they may be implemented in hardware or a combination of hardware and software and may also incorporate other modules or functionalities not described herein.

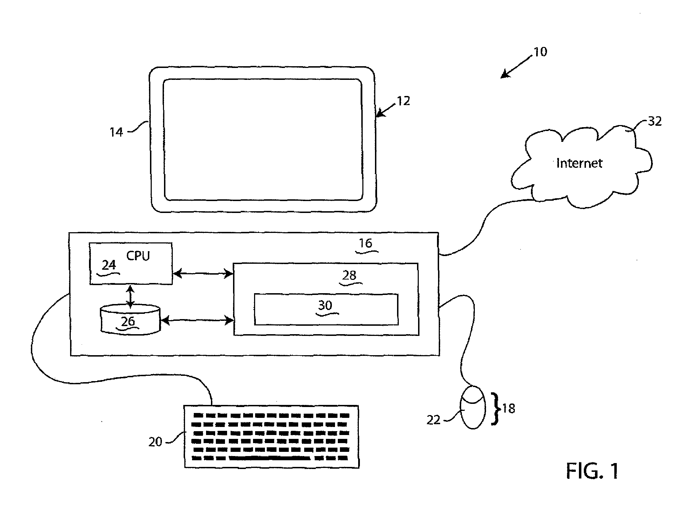

Referring now to the drawing, Fig. 1 is a block diagram illustrating an example of a computer system 110 for statistical calibration of survey results due to bias introduced by non-responsive and/or erroneous survey data in accordance with one example embodiment implemented on a personal computer 112. In particular, the personal computer 112 may include a display unit 114, a processing unit 116, and one or more input/output devices 118 that permit a user to interact with the software application being executed by the personal computer 112. In the illustrated example, the input/output devices 118 may include a keyboard 120 and a mouse 122, but may also include other peripheral devices, such as printers, scanners, and the like. The processing unit 116 may further include a central processing unit (CPU) 124, a persistent storage device 126, such as a hard disk, and a memory 128. The CPU 124 may control the persistent storage device 126 and memory 128.

A software application may be stored in the persistent storage device 126 and then may be loaded into the memory 128 when the software application is to be executed by the CPU 124. In the example shown, an application program 330 for statistical calibration of survey results due to bias introduced by non-responsive and/or erroneous survey data may be loaded in the memory 128. The application program for statistical calibration of survey results due to bias introduced by non-responsive and/or erroneous survey data 330 may be implemented as one or more modules that are executed by the CPU 124. The processing unit 116 may be coupled to the Internet 132.

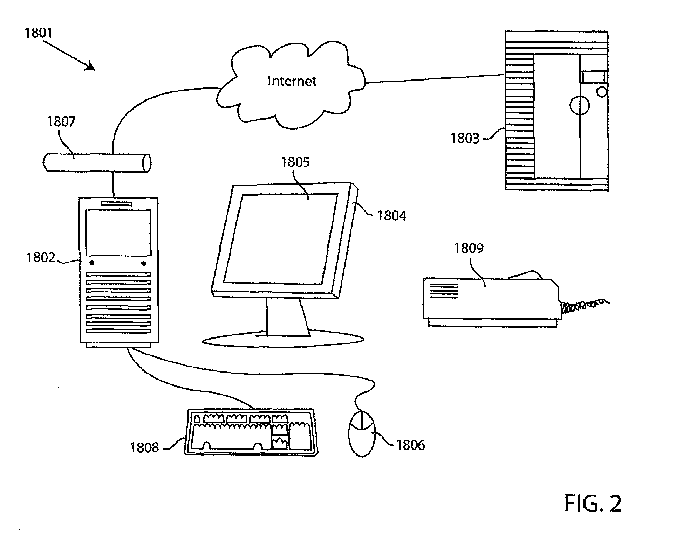

In accordance with other various contemplated example embodiments, the computer system 110 may also be implemented using hardware or, may be implemented on different types of computer systems, such as client/server systems, web servers, mainframe computers, workstations, and the like. Thus, in accordance with another example embodiment, various example embodiments may be implemented via a hosted web server. A system using a hosted web server, generally indicated by the numeral 201, is shown in Fig. 2. The system 201 preferably comprises a web-based application accessed by a personal computer 202, as shown in Fig. 2. For example, the personal computer 202 may be a personal computer operating under a Microsoft, Apple, Unix or other operating system and provided with a graphical user interface including a web browser. In other example embodiments, the personal computer 202 may be replaced by an Internet-connected device such as a tablet computer, smartphone, or Internet-enabled television.

The personal computer 202 can be coupled to a network 207. For example, the network 207 may be implemented using an Internet connection. In one implementation of the system 201, the personal computer 202 can be ported to the Internet, and hosted by a web server 203. The graphical user interface of the system 201 is preferably displayed on a monitor 204 connected to the personal computer 202. A mouse 206 is provided for mouse-driven navigation between screens or windows comprising the graphical user interface of the system 201. The personal computer 202 is also preferably connected to a keyboard 208. The mouse 206 and keyboard 208 enable a user utilizing the system 201 to execute the application program for statistical calibration of survey results due to bias introduced by non-responsive and/or erroneous survey data 330 which may reside on the web server 203. The system 201 may also comprise a printer 209 coupled to the personal computer 202 to provide hard copies of survey results.

In accordance with various example embodiments of the system, a statistical calibration of survey results due to bias introduced by non-responsive and/or erroneous survey data is produced. The statistical calibration of survey results due to bias introduced by non-responsive and/or erroneous survey data is determined using online survey data. The example embodiments in accordance with the present invention will be described by way of example, but not limitation, in respect to advertisements delivered via the Internet to a person using a web-enabled device such as a computer, a tablet computer, a PDA, a web-enabled television, a mobile device such as a cellular telephone (e.g., a "smartphone") or the like.

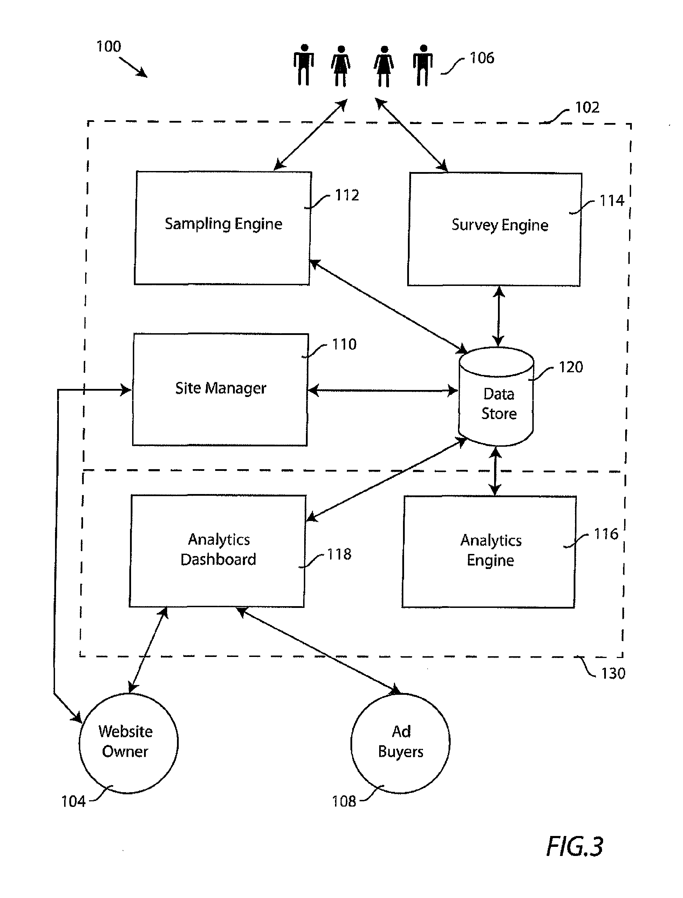

Fig. 3 is a block diagram illustrating a survey environment 300. In the illustrated example, an online survey system 302 may be integral with or provided in combination with the application program 330 for analysis of survey data and for statistical calibration of survey results due to bias introduced by non-responses to surveys and/or erroneous survey data. The online survey system 302 comprises a site manager 310, a sampling engine 312, and a survey engine 314 interfaced to the application program for statistical calibration of survey results due to bias introduced by non-responsive and/or erroneous survey data 330 which comprises an analytics engine 316 and an analytics dashboard 318. In one example embodiment, components 310-318 are implemented as computer program instructions executing on one or more processors included in one or more computers such as the computer system 110 shown in Fig. 1 and/or web server 203 shown in Fig. 2. The components may be implemented as separate threads of the same process/program or as separate processes/programs. One or more components may be combined, and the functions of the components may be intermixed in various example embodiments. In one example embodiment, the components collectively may provide a web-based "software as a service" (SaaS) with which users of the online survey system interact, including parties, such as website owners interested in conducting surveys of viewers of media accessed at certain websites (generally referred to as website owners) 304, viewers 306 having web-enabled devices, and parties interested in the survey results (generally referred to as advertisement purchasers or ad buyers) 308. The online survey SaaS generates surveys, and processes, analyzes, and presents survey data.

The site manager 310 allows a website owner 304 to sign up for or provide survey service and provide information to advertisement purchasers 308. In some example embodiments, the website owner 304 may provide advertisements and therefore also be the equivalent of an advertisement purchaser 308. In some example embodiments, the website owner 304 provides a Universal Resource Locator (URL) associated with any website accessed by viewers 306 who are to be surveyed. The website may be a top level site or a sub-site. As will be described in greater detail below, one or more surveys are generated respecting media delivered by the website to the plurality of viewers 306. The survey information is stored in a data store 320.

All or a portion of the plurality of viewers 306 may be selected to take a survey. In some example embodiments, the web browser of the viewer 306 sends a request to the sampling engine 312 as the viewer is delivered content or browses pages on the website, which include advertisements. In other example embodiments, upon receiving a request, the sampling engine 312 controls whether or not to invite viewers 306 to participate in a survey. In some example embodiments, invitation of a viewer 306 to participate in a survey may be based on one or more of a variety of factors including, for example, the website hit rate, page hit rate, previous participation acceptance rate, time left until survey period ends, number of samples still needed to complete the survey, statistical requirements, etc. If the sampling engine 312 determines that an invitation should be extended to a viewer 306, the viewer 306 is provided with a visual inquiry in the form of a banner, a layer of content, a popup window, etc., to determine if the viewer is willing to participate in a survey. If the viewer 306 responds affirmatively, the survey is retrieved from the data store 320 by the survey engine 314 and delivered to the viewer in the browser, or the viewer may be directed to survey pages constructed by the survey engine.

The survey engine 314 causes survey questions to be displayed, collects survey results, and stores the survey results in the data store 320. The analytics engine 316 analyzes the survey results, as will described in more detail below. The analytics dashboard 318 displays the survey results visually so that they can be viewed by interested parties, such as the website owner 304 and advertisement purchasers 308 for learning about the survey results obtained from viewers 306.

In general, a survey is created and stored for delivery by a website. As will be described in greater detail below, in some example embodiments, the survey may be created by the website owner 304. In other examples, the survey may be created by an advertisement purchaser 308. In some example embodiments, the website owner 304 and/or advertisement purchaser 306 may include survey questions from a set of predefined questions selected from questions stored in a database, of questions to be used in the survey in the data store 320. Optionally, in some example embodiments, the website owner 304 and/or advertisement purchaser 308 may add additional questions themselves. In some example embodiments, certain survey questions may automatically be included in the survey. The survey is presented to potential survey participants that are selected from the plurality of viewers 306. In some example embodiments, the selection is made randomly in order to reduce bias in the sample selected. In some example embodiments, the selection includes a control group of viewers 306.

Once a survey is generated, the website owner 304 may assign a script tag that includes a unique identifier associated to the content delivered to the viewer or page(s) at the website having the target advertisement to be surveyed (*e.g.,* <script src = "http://static.domainname.com/start.js?id=23a878527a"> </script>). The website owner 304 can then indicate that the website is ready for the survey to begin. Hence, every time content incorporating the advertisement or page at the website incorporating the advertisement is loaded in a viewer's browser, the script tag causes the viewer's browser to send a request to the sampling engine 312, which selectively recruits viewers to participate in the survey. The system 302 repeatedly presents the survey to potential survey participants until a substantial sample of viewers 306 have participated in the survey.

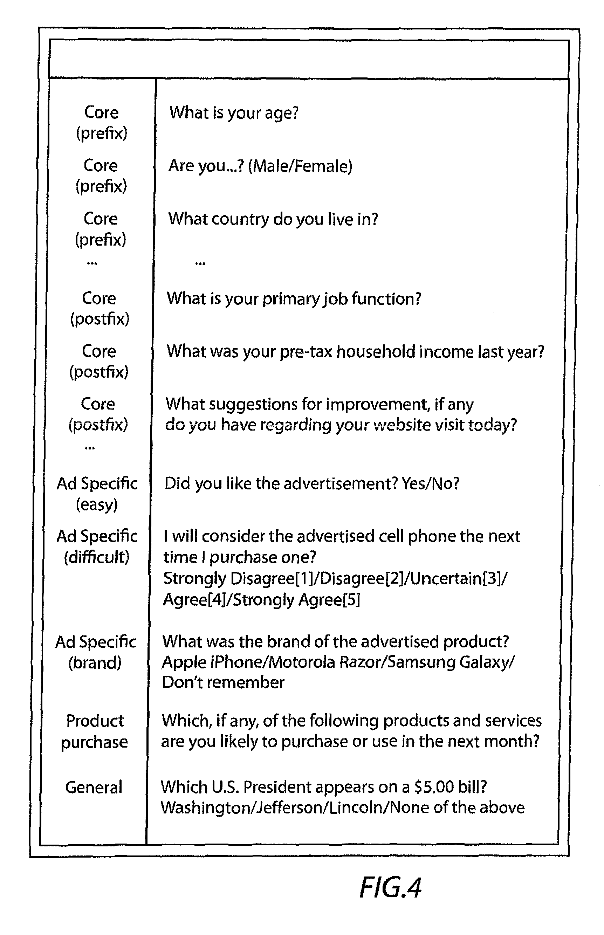

Fig. 4 is a diagram illustrating examples of survey questions. In some example embodiments, survey questions are used to gather demographic information about a viewer 306 (e.g., character traits that are not easily changed) and psychographic information about the viewer (e.g., preferences, interests, and inclinations). In some example embodiments, one or more sets of default questions (for example, "core" questions, "product purchase" questions) pertaining to generic information such as the viewer's demographic and/or psychographic information may be included in the survey as well. In addition, in some example embodiments, the website owner 304 or advertisement purchaser 308 has the option to provide certain custom questions to be included in the survey.

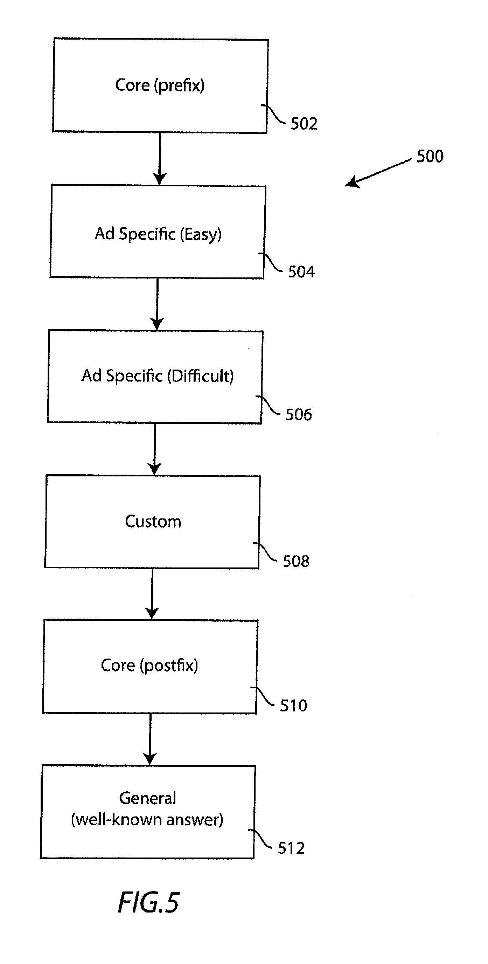

Fig. 5 is a flow diagram 500 illustrating a non-limiting example for ordering the survey questions. In this non-limiting example, questions referred to as "core prefix" questions 502 may be placed at the beginning of the survey. These questions are considered basic and straightforward, involving, for example, age, gender, geographic location, Internet usage, etc. Advertisement specific questions may be placed following the core prefix questions. Within the advertisement specific questions, easier questions 504, such as preferences for different products or services within the same product or service category, may be placed before more challenging questions 506, such as product purchase habits and plans. Optional custom questions 508 may be added after the category specific questions. The most difficult/sensitive questions 510 (referred to as "core postfix" in this example), such as income and written feedback/comments by a viewer 306 may be placed at the end of the survey. A general question 512 whose answer is generally known may also be included in the survey, as will be described in more detail below. In another example, the survey may ask only a single question.

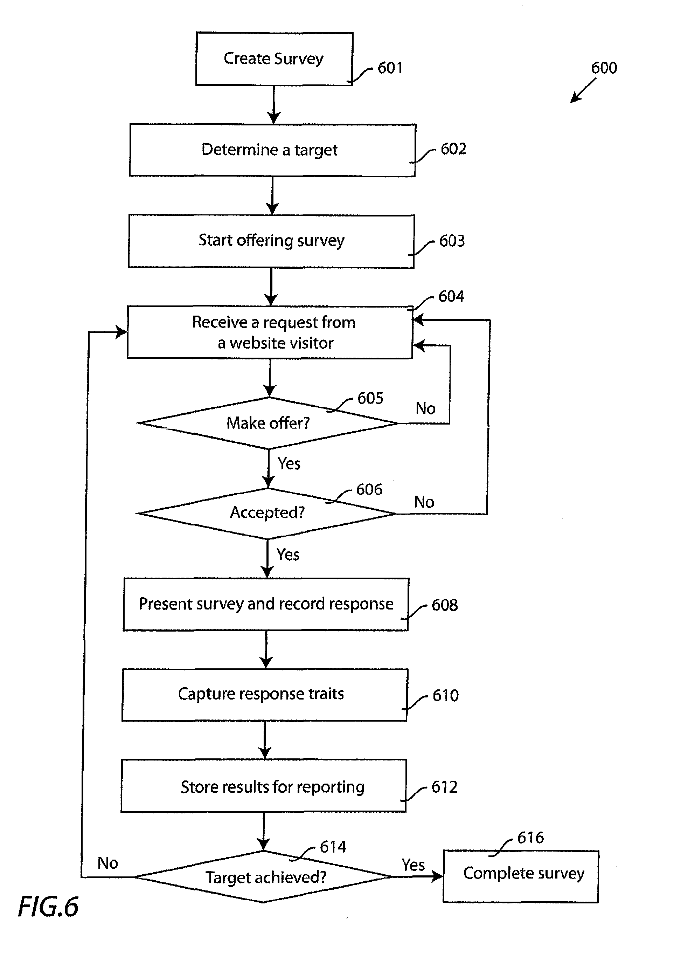

Fig. 6 is a flow diagram illustrating an example of a process for conducting the survey. Process 600 may be performed on a system such as 300. In this example, process 600 starts at 601 with creation of a survey, as described above. At 602, a survey target respecting the advertisement delivered by the website is determined using statistical techniques. The survey target reflects the number of surveys required to achieve a specified margin of error with a specified confidence interval. For example, to achieve a margin of error of ±5% with a confidence interval of 95%, a website that delivers an advertisement to one million viewers 306 per month would require approximately four hundred randomly sampled survey respondents from that month's viewers. At 603, the website initiates the survey.

At 604, a request from a viewer 306 is received. As described previously, in some example embodiments the website owner 304 embeds a script tag into the content that is delivered or on the web page that is accessed by the viewer 306. Consequently, when a viewer's browser loads content or a page at the website, a request may be sent to the online survey system 300. At 605, it is determined whether or not an offer should be extended to the viewer 306 to participate in the survey. In some example embodiments, offers to participate are extended to all viewers 306. In some example embodiments, offers to participate in the survey are extended to only a portion or percentage of the plurality of viewers 306. For example, the portion of participants may be determined by requiring that a random number generated for the viewer 306 is within a predefined range of numbers as a condition to offering the viewer an opportunity to participate in the survey. By way of further example, the portion may be determined by tracking the number of visits since an offer was last extended compared to a predetermined number to ascertain whether an offer is extended to the viewer 306. By way yet another example, the percentage may be computed as a completion rate equal to the number of completed surveys so far to the number of offers and may include an initial completion rate computed based on an initial small number of completions (e.g., 3-5 completed surveys) and a corresponding initial number of survey offers.

If the viewer 306 is not selected and no offer is to be extended, control returns to 605 to wait for another request at 604; else, a survey offer is extended to the viewer 306, and it is determined at 606 whether the survey offer is accepted by the viewer. If a selected viewer 306 does not accept the survey offer, control returns to 604 to wait for another survey request. If the viewer 306 accepts, the survey questions are presented to the viewer in the viewer's browser in an appropriate sequencing order, and responses to the survey questions are recorded at 608. Optionally, additional response traits are captured at 610.

As used herein, response traits refer to characteristics associated with the survey respondent other than the responses to the survey response context. Examples of response traits include time of survey, browser type, language used by the browser, page context information such as the URL from which the viewer is referred, keywords in the referring URL, operating system, screen size, network location, geographic location, etc.

At 612, the results (including survey responses and response traits) are stored in the data store 320. At 614, it is determined if the target sample has been obtained. If so, process 600 completes at 616; else, control returns to 604 to wait for another request from a viewer 306 until a representative number of viewers have completed the survey to achieve the target sample.

Once a substantial number of viewers 306 have completed the survey, the accumulated survey results can be presented for the population sampled. It can also be broken down and analyzed in numerous ways. For example, the analytics dashboard 318 can present to the website owner 304 and/or advertisement purchaser 308 a breakdown of survey respondents' profiles based on answers to the survey questions, such as a breakdown based on gender, age, race, occupation, income, geographic location, purchasing habits, purchasing intentions, or other survey responses. Furthermore, the analytics dashboard 318 can present survey information break-downs based on response traits, such as time, page context, browser type, operating system, geographic location or referring site, such as a blog or search engine or other directory. However, the survey results are typically biased if the fraction of non-respondents is high or the survey results include erroneous survey data.

Based on empirical data, the non-response to such surveys is high and is on the order of 90% to 95% and may be as high as 99%. That is, approximately one in a hundred viewers can be expected to respond to such a survey. Therefore, it is critical that the survey results for the one percent of the plurality of viewers 306 that respond are assessed to determine the non-responsive survey bias, because any skew in the survey results as a result of non-responsive survey bias will impact the survey results.

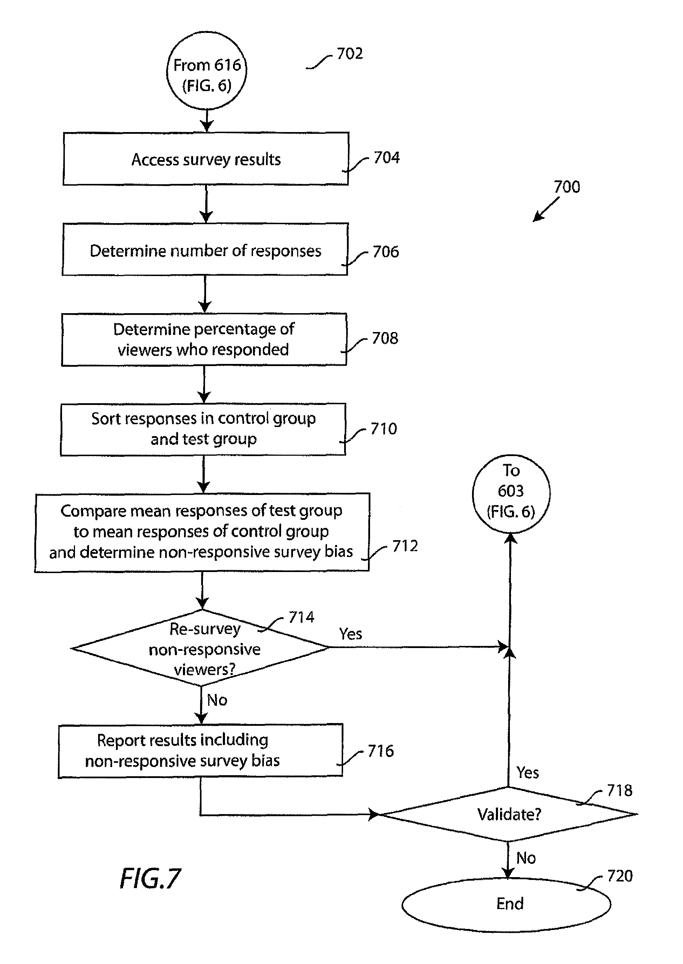

In accordance with one example embodiment, a method for determination of non-responsive survey bias may be performed based on the initial survey results. As illustrated in the process flow diagram shown in Fig. 7, a non-responsive survey bias determination method 700 starts at 702, after the survey is completed at 616 shown in Fig. 6. At 704, the survey response data stored in a processor-readable storage medium such as the data store 320 is accessed. A processor executable sample analysis module comprising the analytics engine 316 analyzes the survey responses to determine the number of responses at 706. The total number of viewers 306 to whom the survey was delivered is tracked by the sampling engine 312 and stored in the data store 320. At 708, the sample analysis module determines the percentage of viewers 306 responding to the survey by dividing the number of responses to the survey by the total number of viewers to whom the survey was offered.

As described above, the number of responses needs to achieve the survey target to be reasonably accurate; that is, if the percentage of viewers 306 responding to the survey is below a predetermined threshold percentage, the sample may be considered too small to be susceptible to statistical analysis. In one example implementation, the predetermined threshold percentage may be based on the survey target needed to achieve a specified margin of error with a specified confidence interval. For example, to achieve a margin of error of ±5% with a confidence interval of 95%, a website that delivers an advertisement to one million viewers per month would require approximately 400 randomly sampled survey respondents from that month's viewers. Also, the percentage of responses determines the weight that each response has in the statistical analysis; that is, the lower the percentage of responses, the greater the weight each response will have in the statistical analysis and the more the overall survey results are biased by the non-responsive survey data, e.g., if the impressions of the majority of a small number of responding viewers 306 were not favorable, the conclusion will be that the advertisement was likely unsuccessful in fostering a favorable impression with the non-responding viewers because the advertisement did not resonate with the non-responding viewers and they elected not to complete the survey either because they did not absorb the content of the advertisement and did not feel qualified to answer the survey questions or they did not want to spend time answering questions about an advertisement that did not appeal to them in the first place. Persons skilled in the art will also be familiar with other reasons for determining the percentage of responses to the survey.

In one preferred implementation, a portion of the plurality of viewers 306 constitutes a control group. The identification of viewers 306 in the control group is through user ids or "tracking cookies" on the viewing devices used by viewers 306 within the control group vis-à-vis viewers not identified by user ids or tracking cookies as being viewers in the control group, who will hereafter be referred to for convenience as the "test group." Thereafter, the plurality of viewers 306 within the test group may be identified as viewers within the test group based on user ids or tracking cookies on their viewing devices. The sample analysis module sorts the survey results from viewers 306 in the test group and survey results from viewers in the control group at 710.

At 712, a statistical analysis module comprising the analytics engine 316 accesses the survey data obtained from the two groups to determine the mean response of the control group and the mean response of the test group and compares the mean response from viewers 306 in the test group to the mean response from viewers in the control group to ascertain the consistency of the survey data. By way of non-limiting example, the survey data in response to the general question "Did you like the advertisement? Yes/No." can be compared. If a majority of viewers 306 in the test group and a majority of viewers in the control group answered "Yes", then the survey results are considered to be consistent, and the mean is "favorable."

The statistical analysis module can also analyze the standard deviation in the survey results respecting certain survey questions. By way of non-limiting example, the statistical analysis module can parse the survey data obtained from viewers 306 in the test and control groups to the question "I will consider the advertised cell phone the next time I purchase one? Strongly Disagree[1]/Disagree[2]/Uncertain[3]/Agree[4]/Strongly Agree[5]". The mean can be determined by summing all the numbers (e.g., "1", "2", ..."5") corresponding the responses and dividing by the number of responses and basing the mean on either the raw result or, alternatively, rounding the result to the nearest whole number to determine the mean.

The statistical analysis module can then determine from the survey results of the plurality of viewers 306 responding to the survey what impact the advertisement had in respect to aiding a future purchase decision. If, for example, a majority of the plurality of viewers 306 responded "Agree" (e.g., "Agree" is determined to be the mean), the survey results can be analyzed to determine the variance in responses from the plurality of viewers, and the statistical analysis module can then determine the standard deviation based on the variance in the responses among viewers by evaluating the responses other than "Agree" to assess whether the remaining viewers trended toward "Uncertain" or toward "Strongly Agree".

The analysis, in this non-limiting example, can be based on standard statistical analytics. In statistics and probability theory, standard deviation (represented by the symbol sigma, σ) shows how much variation or "dispersion" exists from the average (mean, or expected value). A low standard deviation indicates that the data points tend to be very close to the mean; high standard deviation indicates that the data points are spread out over a large range of values. The standard deviation of a random variable, statistical population, data set, or probability distribution is the square root of its variance.

The variance and standard deviation among the responding viewers 306 may be determined to assess bias due to non-responses to the survey. That is, the standard deviation may infer a positive or negative bias. For example, if the variance and standard deviation show a trend among responses away from "Agree" toward "Strongly Agree", the non-responsive survey bias is determined to be positive. Conversely, if the variance and standard deviation show a trend among responses away from "Agree" toward "Uncertain", the non-responsive survey bias is determined to be negative.

At 716, based on the results of the analysis, a data compilation and summary module comprising the analytics dashboard 318 can create a report containing the raw data and the results of the analyses of the survey data from the plurality of viewers 306 respecting the mean response, the standard deviation from that mean response, and the determination of non-responsive survey bias based on the responses of viewers 306 in the test group, as well as the raw data and the results of the analyses for the plurality of viewers in the control group. If validation is not initiated at 718, the process ends at 720.

In some example embodiments, the statistical analysis module can also compare the results of the standard deviation of the test group to that of the control group to determine whether results are similar. Consequently, it may be desirable to re-survey to obtain survey data from viewers 306 who did not participate in the initial survey, as described in more detail below.

The statistical analysis module can also analyze the results of a question "What was the brand of the advertised product? Apple iPhone/ Motorola Razor/Samsung Galaxy/Don't Remember" to validate the responses from the plurality of viewers 306, as well as to determine whether the advertisement engendered brand recognition. If the plurality of viewers 306 identify the correct brand in their responses, this reinforces their responses to the question regarding their responses to considering the product for purchase. On the other hand, if responses of the plurality of viewers 306 include "Strongly Agree" and "Don't Remember" this draws into question the survey data. A check of the corresponding responses from the plurality of viewers 306 in the control group can also serve as a double check of what appears to be questionable survey results respecting the test group. However, if the results from the test and control groups are similar, the statistical analysis module can determine that the advertisement fails to create or increase brand recognition.

In accordance with another example embodiment, the determination of non-responsive survey bias may be performed as a two-phase process. The first phase is the same as described above. The second phase is to re-survey the plurality of viewers 306 to whom the advertisement was initially delivered via the Internet, but did not respond, by returning control to 603 shown in Fig. 6, and perform the analysis again using the survey data from both the initial and the new responses from the plurality of viewers comprising both the test group and the control group.

In one example embodiment only the plurality of viewers 306 in the test group who did not respond are re-surveyed. The identity of the plurality of viewers 306 to be re-surveyed can be determined by tracking cookies. The two-phase process has the added advantage of enabling the statistical analysis module to determine the consistency of survey results from the initial survey and re-survey. The survey data from the re-survey are then combined with the initial survey data and the analysis proceeds as described above to assess bias due to non-responses to the initial survey.

Persons skilled in the art will understand that the identification of the plurality of viewers 306 in the test group and in the control group require the permission of those viewers to use user ids. Furthermore, persons skilled in the art also understand that tracking cookies are typically maintained for a limited amount of time, for example, 30 days, such that a re-survey must occur within the allotted period of time prior to the deletion of tracking cookies.

The following two-stage process is set forth by way of example but not limitation. By way of this non-limiting example, the survey question is "I will consider the advertised cell phone the next time I purchase one? Strongly Disagree[1] /Disagree[2] /Uncertain[3] /Agree[4] /Strongly Agree[5]". If, for example, as described above, a majority of the test group responded "Agree" and the standard deviation computed from the variance in the responses among viewers 306 in the test group trended toward "Strongly Agree", rather than toward "Uncertain", the non-responding viewers of the test group can be re-surveyed by returning control to 603 shown in Fig. 6 to determine whether the trend remains toward "Strongly Agree" among viewers of the test group who did not respond, or whether the non-responsive survey bias is different than toward "Strongly Agree". At 718, a re-survey may also be conducted to validate the results of the analysis.

In accordance with another example embodiment, the determination of erroneous responses in the survey results may be performed to determine bias due to erroneous survey data. The occurrence of erroneous responses draws the survey data obtained from viewers 306 being surveyed into question and enables the website owner 304 or advertisement purchaser 308 to discard the survey results obtained from those viewers as having questionable validity. In one example, based on empirical data, it was determined that approximately 20% of responses to surveys contained erroneous data.

In order to determine whether the survey data from a viewer 306 is erroneous, one or more questions to which the plurality of viewers 306 are expected to know the answer are included in the survey. If a viewer 306 responds incorrectly, *e.g.,* an erroneous answer to a question whose answer is generally known, then the survey data for that viewer may be discarded.

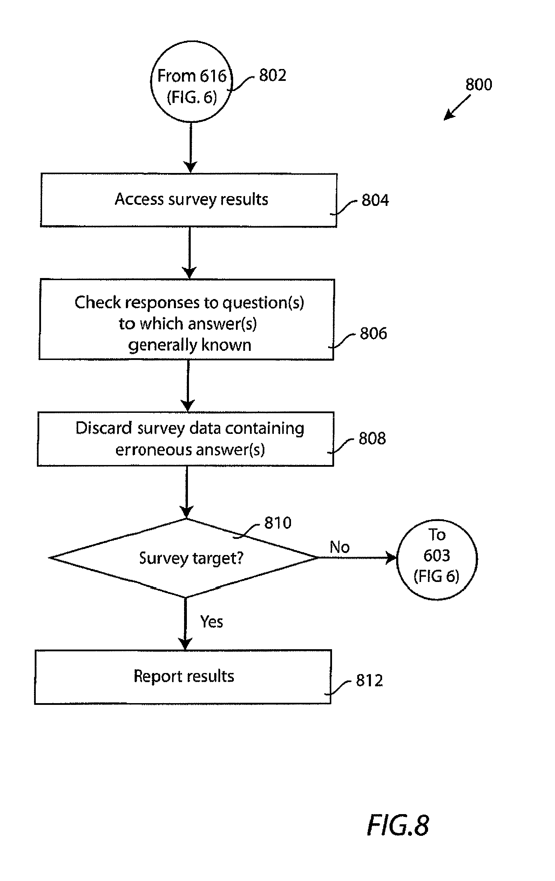

Fig. 8 is a flow diagram of an example embodiment of a process 800 to determine bias due to the presence of erroneous data in the survey results. The erroneous survey bias determination method 800 starts at 802, after the survey is completed at 616 shown in Fig. 6. At 804, the survey response data stored in a processor-readable storage medium such as the data store 320 is accessed. At 806, the processor executable sample analysis module comprising the analytics engine 316 checks the answers to one or more questions included in the survey to which the answer is generally known. By way of non-limiting example, referring again to Fig. 4, a general question can be included in the survey such as "Which U.S. president appears on a $5.00 bill? Washington/Jefferson/ Lincoln/None of the above." If the viewer 306 responds "Washington", e.g., an erroneous answer to a question whose answer is generally known to be "Lincoln", then the survey data for that viewer may be discarded at 808. At 810, the sample analysis module then subtracts the number of discarded survey results from the total survey results and determines whether or not a statistically significant number of responses remains. If not, the survey may be repeated by returning control to 603 shown in Fig. 6; else, at 812, based on the results of the analysis of survey results, the data compilation and summary module comprising the analytics dashboard 318 can create a report containing the raw data and the results of the analyses of the survey data.

Although various embodiments have been described using specific terms and devices, such description is for illustrative purposes only. The words used are words of description rather than of limitation. It is to be understood that changes and variations may be made by those of ordinary skill in the art without departing from the spirit or the scope of various inventions supported by the written disclosure and the drawings. In addition, it should be understood that aspects of various other embodiments may be interchanged either in whole or in part. For example, statistical calibration of survey results due to bias introduced by non-responsive and/or erroneous survey data have been described by way of non-limiting examples. However, various principles disclosed herein apply more generally, e.g. in connection with conducting censuses. It is therefore intended that the claims be interpreted in accordance with the true spirit and scope of the invention without limitation or estoppel.

A system, method, and computer program determine bias in survey results due to non-responsive and/or erroneous survey response data, assess the impact of bias introduced by non-responsive and/or erroneous survey data on the survey results, and analyze the survey results accordingly to provide a more accurate assessment of the impressions of viewers of content (*e.g.,* advertisements) viewed by the persons being surveyed. The analysis allows an advertiser to modify an advertisement to better promote a product or service and enable the advertiser to increase the probability of success of an advertising campaign and the cost-effectiveness of the campaign.

## Claims

1. A system to correct for bias in survey results respecting advertising content associated to media viewed by a plurality of viewers due to non-responses to a survey, comprising:
a sampling engine comprising instructions executable by a computer system to conduct a survey comprising one or more questions provided to the plurality of viewers of media accessible by the plurality of viewers;
a survey engine comprising instructions executable by the computer system to receive survey data comprising responses by the plurality of viewers responding to the survey;
a data store comprising instructions executable by the computer system to store the survey response data in a computer-readable storage medium; and
an analytics engine comprising instructions executable by the computer system after the survey is completed to analyze the survey response data to determine a mean, variance, and standard deviation for the survey response data and to analyze the variance and standard deviation among responding viewers to infer the non-responsive survey bias.

2. A system as recited in claim 1 further comprising an analytics dashboard comprising instructions executed by the computer system to create a report containing the mean response, the standard deviation from that mean response, and the determination of non-responsive survey bias based on the responses of the plurality of viewers.

3. A system to determine bias due to erroneous survey data in survey results respecting advertising content associated to media viewed by a plurality of viewers, comprising:
a sampling engine comprising instructions executable by a computer system to conduct a survey comprising one or more questions provided to the plurality of viewers of media accessible by the plurality of viewers, wherein at least one of the questions consists of a question to which the plurality of viewers are expected to know the answer;
a survey engine comprising instructions executable by the computer system to receive survey data comprising responses by the plurality of viewers responding to the survey;
a data store comprising instructions executable by the computer system to store the survey response data in a computer-readable storage medium; and
an analytics engine comprising instructions executable by the computer system after the survey is completed to analyze the survey response data to check the answers in the survey data to the at least one question included in the survey to which the answer is generally known and to selectively discard the survey data including erroneous answers.

4. A system as recited in claim 3 wherein the survey data including erroneous answers are discarded and wherein the analytics engine subtracts a number of discarded survey responses including the erroneous answers and determines if a statistically significant number of responses remains and wherein the sampling engine repeats the survey if the remaining number of responses is statistically insufficient.

5. A system as recited in claim 3 further comprising an analytics dashboard comprising instructions executed by the computer system to create a report containing the survey data.

6. A method for determination of non-responsive survey bias in survey results respecting advertising content associated to media viewed by a plurality of viewers, comprising:
conducting a survey comprising one or more questions provided to the plurality of viewers of media accessible by the plurality of viewers;
receiving survey data comprising responses by the plurality of viewers responding to the survey;
storing the survey response data in a processor-readable storage medium;
after the survey is completed, using a processor to access the survey response data;
determining a mean, variance, and standard deviation for the survey response data using the processor; and
analyzing the variance and standard deviation among responding viewers using the processor to infer the non-responsive survey bias.

7. A method as recited in claim 6 further comprising tracking a total number of viewers to whom the survey was provided and storing the total number in the processor-readable storage medium.

8. A method as recited in claim 6 further comprising analyzing the survey response data to determine a number of responses.

9. A method as recited in claim 8 further comprising tracking a total number of viewers to whom the survey was provided, storing the total number in the processor-readable storage medium, determining a percentage of viewers responding to the survey by dividing the number of responses to the survey by the total number of viewers to whom the survey was provided, and determining if the percentage at least equals a predetermined threshold percentage so that the survey results from the plurality of viewers constitute a sufficient sample to be susceptible to reliable statistical analysis.

10. A method as recited in claim 6 wherein a first portion of the plurality of viewers constitutes a control group and a second portion of the plurality of viewers constitutes a test group.

11. A method as recited in claim 10 further comprising identifying viewers in the control group through tracking cookies on viewing devices used by respective viewers within the first portion of viewers.

12. A method as recited in claim 11 wherein viewers not initially identified by user ids or tracking cookies as being viewers in the control group are subsequently identified as viewers within the test group based on user ids or tracking cookies on viewing devices used by respective viewers within the second portion of viewers.

13. A method as recited in claim 10 further comprising sorting the survey data from viewers in the test group and survey data from viewers in the control group.

14. A method as recited in claim 13 further comprising accessing the survey data obtained from the two groups to determine the mean response of the control group and the mean response of the test group and comparing the mean response from the plurality of viewers in the test group to the mean response from the plurality of viewers in the control group to ascertain the consistency of the survey data.

15. A method as recited in claim 6 further comprising creating a report containing the mean response, the standard deviation from that mean response, and the determination of non-responsive survey bias based on the responses of the plurality of viewers.

16. A method as recited in claim 6 further comprising re-surveying non-responding viewers to obtain survey data.

17. A method as recited in claim 6 further comprising analyzing the survey data to assess brand recognition.

18. A method for determination of bias due to erroneous survey data in survey results respecting advertising content associated to media viewed by a plurality of viewers, comprising:
conducting a survey comprising one or more questions provided to the plurality of viewers of media accessible by the plurality of viewers, wherein at least one of the questions consists of a question to which the plurality of viewers are expected to know the answer;
receiving survey data comprising responses by the plurality of viewers responding to the survey;
storing the survey response data in a processor-readable storage medium;
after the survey is completed, using a processor to access the survey response data; and
analyzing the survey response data using the processor to check the answers in the survey data to at least the question included in the survey to which the answer is generally known and to selectively discard the survey data including erroneous answers.

19. A method as recited in claim 18 wherein the survey data including erroneous answers is discarded and further comprising subtracting a number of discarded survey responses including the erroneous answers, determining if a statistically significant number of responses remains, and repeating the survey if the remaining number of responses is statistically insufficient.

20. A method as recited in claim 18 further comprising creating a report containing the survey data.
